# EUROPEAN PATENT SPECIFICATION

(11) **EP 1 987 555 B1**
(45) Date of publication and mention of the grant of the patent: **14.12.2011**
(21) Application number: 06835323.4
(22) Date of filing: 21.12.2006
(51) Int. Cl.: H01M 2/34

(54) **SAFETY APPARATUS USING HIGH POWER BATTERY**
SICHERHEITSVORRICHTUNG MIT EINER HOCHLEISTUNGSBATTERIE
APPAREIL DE SÉCURITÉ UTILISANT UNE BATTERIE HAUTE PUISSANCE

(30) Priority: 23.02.2006 KR 20060017739
(43) Date of publication of application: 05.11.2008
(73) Proprietor: SK INNOVATION CO., LTD., Jongro-gu Seoul 110-110 (KR)
(72) Inventor: YANG, Sung Mo, Yuseong-gu, Daejeon 305-810 (KR); OH, Jeon Keun, Daejeon 305-761 (KR); DO, Yu Rim, Daejeon 302-777 (KR); LEE, Jae Myoung, Pyeongtaek-si, Gyeonggi-do 450-150 (KR)
(74) Representative: Wilkinson, Stephen John
(86) International application number: PCT/KR2006/005619
(87) International publication number: WO 2007/097518

(56) References cited:
- US-A- 6 117 586
- US-A1- 2002 041 993
- US-A1- 2004 258 986
- US-A1- 2005 277 018
- US-B2- 6 891 353

## Description

The present invention relates to a safety apparatus for protecting a battery when it is short-circuited, and more particularly to a safety apparatus for use in the event of a short circuit of a high power battery, in which a positive temperature coefficient (PTC) function is integrated into the tab of a battery.

### [Background Art]

In accordance with the development of high-tech products, such as digital cameras, cellular phones, notebook computers, and hybrid automobiles, research and development on secondary batteries which are chargeable and dischargeable, unlike primary batteries, has actively been conducted. Representative secondary batteries include a Ni(nickel)-Cd(cadmium) battery, a Ni-metal hydride battery, a Ni(nickel)-H(Hydrogen) battery, a lithium ion battery, etc. Of such secondary batteries, a lithium ion secondary battery produces an operating voltage of 3.6V or more and thus is used as the main power source for portable electronic appliances or hybrid automobiles. In the case in which lithium ion secondary batteries are used in hybrid automobiles, the secondary batteries are used in the form in which a plurality of lithium ion batteries is connected in series. The lithium battery produces a voltage that is three times the voltage of a nickel-cadmium battery or a nickel-metal hydride battery, and has high energy density-to-weight ratios, so the use of the lithium battery is rapidly increasing.

The lithium ion secondary battery can be manufactured in a variety of types, for example, cylindrical type and prismatic type. The Lithium polymer batteries that have been most highly spotlighted in recent years have been generally manufactured in a pouched form having flexibility, so that they can be freely formed into a variety of shapes. The lithium polymer batteries are useful and helpful in meeting trends towards slimness and light weight of portable electronics because they are highly safe and light weight.

In such lithium ion batteries, cell resistance is reduced as low as possible in order to produce high power. Accordingly, lithium ion batteries can provide extremely high currents due to their low cell resistance when short-circuited. This causes a battery temperature to rise, resulting in the explosion of lithium ion batteries.

In order to prevent explosion when short-circuited, lithium ion batteries generally include positive temperature coefficient (PTC) elements. The PTC element starts to operate in the event of a short-circuited, and when current rapidly increases, thereby preventing explosion.

The PTC element is a device that interrupts electrical conduction by using the positive resistance-temperature characteristic, i.e. positive temperature coefficient (PTC), of a conductive polymer, which changes conductivity through heat expansion.

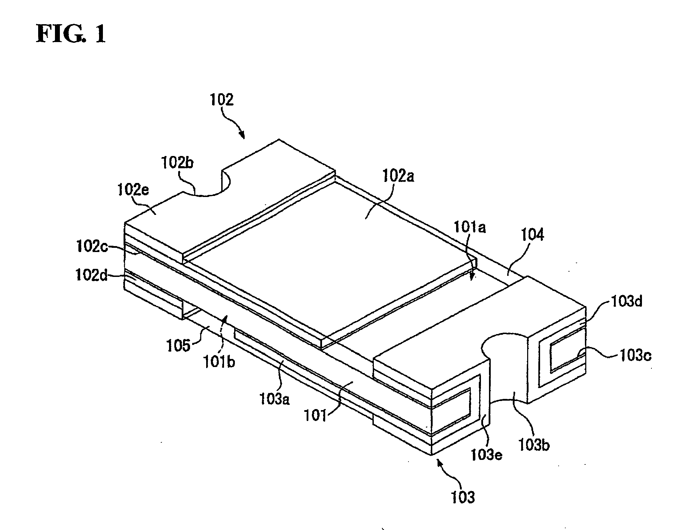

An exemplary polymer PTC is described with reference to FIG. 1. FIG. 1 is a perspective view illustrating a polymer PTC according to the related art. Reference symbol 101 denotes a conductive polymer, reference symbols 102 and 103 denote electrodes in contact with the conductive polymer 101, and reference symbols 104 and 105 denote an insulating resin film covering the electrodes 102 and 103.

The conductive polymer 101 has the rectangular panel shape and uniform thick when it is viewed from a planar direction. The conductive polymer 101 is a polymer resin prepared by kneading polyethylene and carbon black and then performing cross-linking using radio active rays.

The conductive polymer 101 has an internal structure in which carbon black grains are coupled at room temperature, so a plurality of conduction paths through which current flows is formed therein. As a result, the conductive polymer 101 exhibits good conductance.

However, if the conductive polymer 101 is expanded by heat due to, for example, an increase in the ambient temperature or overcurrent in a conduction path, the distance between carbon black grains is increased, so the conduction path is cut and conductivity is rapidly decreased (increasing resistance).

The electrodes 102 and 103 are installed at respective end portions of the conductive polymer 101. The electrode 102 comprises an electrode member 102a made of copper and installed along the first surface 101a of the conductive polymer 101, a base part 102b connected to the electrode member 102a and installed at an end portion of the conductive polymer 101, and nickel foil 102c provided between the conductive polymer 101 and the electrode member 102a.

The electrode 103 has the same structure as the electrode 102, and comprises an electrode member 103a made of copper and installed along the second surface 101b of the conductive polymer 101, a base part 103b connected to the electrode member 103a and installed at the other end of the conductive polymer 101, and nickel foil 103c provided between the conductive polymer 101 and the electrode member 103a.

The electrode member 102a has the same width as the conductive polymer 101, and an end portion of the electrode member 102a having the rectangular shape is installed in a manner such that a parallel gap is provided between the electrode member 102a and the opposed electrode 103, particularly between the electrode member 102a and an electrode member 103d which will be described below. The base part 102b is formed by connecting the electrode member 102a formed on the first surface of the conductive polymer 101 and an electrode member 102d made of copper and remaining on the opposite surface (second surface) 101b of the conductive polymer 101 through a method of performing soldering on a cover layer 102e.

The electrode member 103a has the same width as the conductive polymer 101, and an end portion of the electrode member 103a has a rectangular shape and is formed in a manner such that a parallel gap is provided between the electrode member 103a and the opposed electrode 102, particularly the electrode member 102a of the electrode 102.

The base part 103b is formed by connecting the electrode member 103a and the electrode member 103d made of copper and remaining on the first surface of the conductive polymer 101 through a method of performing soldering on the cover layer 103e.

The resin film 104 is formed on the first surface of the conductive polymer 101 to cover the electrode member 102a, other than the base part 102b and the electrode member 102d. The resin film 105 is formed on the second surface of the conductive polymer 101 to cover the electrode member 103a, other than the base part 103b and the electrode member 103d.

The above-described polymer PTC lets current flow using the PTC characteristic of the conductive polymer 101 when the ambient temperature is lower than a predetermined temperature, which is the temperature at which the conductive polymer expands, and stops current from flowing when the ambient temperature is a predetermined temperature or higher as the conductive polymer 101 expands. The polymer PTC is a switch that is operated using the ambient temperature of the polymer PTC as the trigger of the above-described polymer PTC.

Further, the polymer PTC can use current as a trigger in such a manner that the conductive polymer 101 cuts electric conduction by expanding due to self heating caused by Joule's heat when overcurrent occurs between the electrodes 102 and 103, but the conductive state between the electrodes 102 and 103 is restored when the overcurrent is eased.

In the above-described polymer PTC, the sides and corners of the electrode member 102a and the nickel foil 102c are exposed on one side of the conductive polymer 101 in the longitudinal direction because the electrode member 102a is stacked on one surface of the conductive polymer 101.

Similarly, the sides and corners of the electrode member 103a and the nickel cladding foil 103c are exposed on the other side of the conductive polymer 101 since the electrode member 103a is stacked on one surface of the conductive polymer 101.

US 2004/0258986 A1 discloses a stacked lithium-ion rechargeable battery which comprises a plurality of stacked positive and negative electrode couples forming a battery core, each of said couple having a negative electrode, a positive electrode, a separator, and non-aqueous electrolyte, all encased in a battery case. There are thin neck parts extending from the base plates of the positive and negative electrodes to form the current collectors of the positive and negative electrodes. The current collectors include a PTC area which connects together the current collectors of the same electrode in the positive and negative electrodes of the core. When the battery short-circuits, the internal temperature increases and resulting high temperature causes the PTC area to melt and break so as to cut off the connection between the particular electrode plate and with the other positive and negative electrodes. The PTC area that may be caused to melt and break by a temperature increase is, at all times, inside the battery case.

### [Disclosure]

### [Technical Problem]

The above-described polymer PTC has a low capacity and was developed for small low-power electronics. In order to use the PTC for a high power lithium secondary battery producing current of 100A or more, the PTC must have high capacity. However there is a problem in that the size of PTC increases as the PTC is made to have higher capacity. Accordingly, it is difficult to put the related PTC part to practical use in high power lithium batteries.

### [Technical Solution]

Accordingly, the present invention is provided in view of the above-described problem. In order to achieve the above objects and advantages, according to one aspect of the present invention, there is provided a safety apparatus for short-circuit of a high power battery, comprising: a casing; a battery part including a first electrode plate, a separator, and a second electrode plate arranged in that order and disposed inside the casing; a first tab connected to one edge of four edges of the first electrode plate via a first tab welding part and protruding outside the casing; and a second tab connected to one edge of four edges of the second electrode plate via a second tab welding part and protruding outside the casing, wherein the first tab comprises a portion which ruptures when the first tab and the second tab are short-circuited such that electrical conduction is interrupted.

### [Advantageous Effects]

According to the present invention, the safety apparatus for responding to a short-circuit in a high power battery has the advantageous effect of preventing explosions in a battery when the battery is short-circuited by integrating a PTC function into the tab of a high power lithium secondary battery.

The safety apparatus for responding to a short-circuit in a high power battery has an additional advantageous effect of implementing a PTC function in a small space at low cost by eliminating the requirement for additional installation space and additional connection work for a PTC element since the PTC function is integrated into the tab of a high power lithium secondary battery.

### [Description of Drawings]

FIG.1 is a perspective view illustrating a polymer PTC according to the related art;
FIG.2 is a plan view illustrating a lithium secondary battery including a short-circuit safety apparatus according to one embodiment of the present invention;
FIG.3 is a cross-sectional view taken along line I-I in FIG.2;
FIG.4 is a perspective view illustrating a positive tab, shown in FIG.2;
FIG.5 is a view illustrating the short-circuited status of the lithium secondary battery including the safety apparatus, according to the embodiment of the present invention; and
FIG.6 is a view illustrating rupture of a safety tab, caused by a short-circuit in a lithium secondary battery including a safety apparatus according to one embodiment of the present invention.

### <Brief Description of Reference Symbols in Drawings>

- 210:: Lithium secondary battery
- 211:: Battery part
- 212:: Casing
- 213:: Positive tab
- 213a:: Positive tab welding part
- 214:: Negative tab
- 214a:: Negative tab welding part
- 216:: Conductive plate
- 217:: Ruptured portion

### [Best Mode]

In order to achieve the above objects, there is provided a safety apparatus for short-circuit of a high power battery, comprising: a casing; a battery part including a first electrode plate, a separator, and a second electrode plate arranged in that order and disposed inside the casing; a first tab connected to one edge of four edges of the first electrode plate via a first tab welding part and protruding outside the casing; and a second tab connected to one edge of four edges of the second electrode plate via a second tab welding part and protruding outside the casing, wherein the first tab comprises a portion which ruptures when the first tab and the second tab are short-circuited such that electrical conduction is interrupted.

### [Mode for Invention]

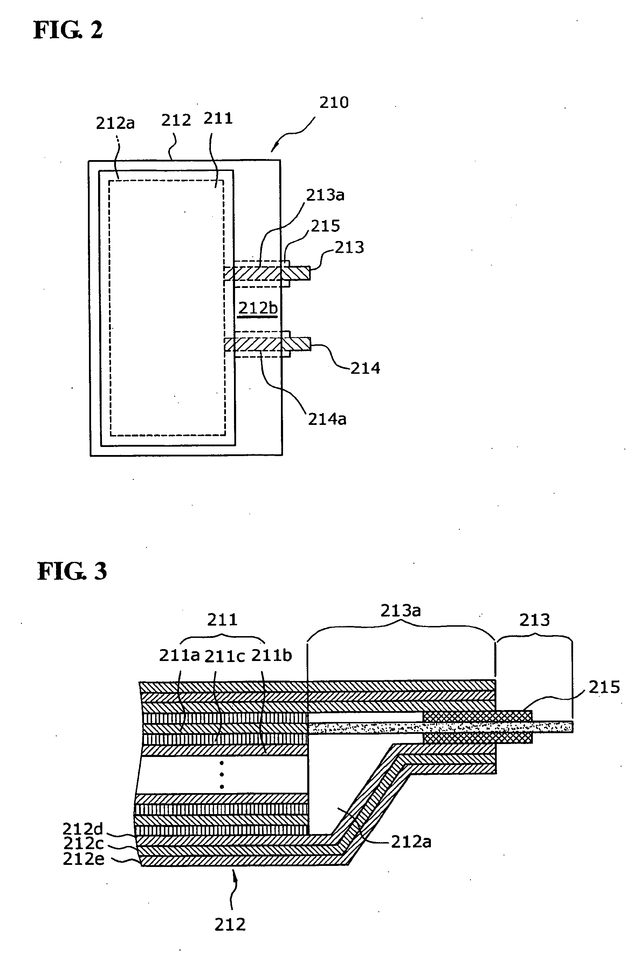

The safety apparatus for a high power battery according to one embodiment of the present invention will be described with reference to FIG.2 through FIG.6.

FIG.2 is a perspective view illustrating a pouch type lithium secondary battery including the safety apparatus according to the present invention.

With reference to FIG.2, the pouch type lithium secondary battery 210 including the safety apparatus according to the present invention comprises a battery part 211, and a casing 212 for providing a space 212a for receiving the battery part 211.

The battery part 211 includes a positive electrode, a separator, and a negative electrode arranged in that order. This battery part 211 is wound in one direction. The battery part 211 can also have a structure in which a plurality of positive electrodes, a plurality of separators, and a plurality of negative electrodes are stacked. Each electrode is electrically connected to a positive tab 213 and to a negative tab 214 via a positive welding part 213a and a negative welding part 214a, respectively.

The positive and negative tabs 213 and 214 protrude from a sealing surface 212b of the casing 212 and are thus exposed outside. An end portion of the protruding positive tab 213 is attached to the positive tab welding part 213a. The positive tab welding part 213a serves as a connection means between the positive tab 213 and the positive electrode, and respective end portions of the positive tab welding part 213a are connected to the positive tab 213 and the positive electrode, respectively. Further, an end portion of the protruding negative tab 214 is attached to the negative tab welding part 214a. The negative tab welding part 214a serves as a connection means between the negative tab 214 and the negative electrode, and respective end portions thereof are connected to the negative tab 214 and the negative electrode, respectively.

On the outer surfaces of the positive and negative tabs 213 and 214 and the positive and negative tab welding parts 213a and 214a, a sealing tape 215 is wound in order to prevent short-circuiting from occurring between the casing 212, the tabs 213 and 214, and the positive and negative welding parts 213a and 214a at a contact portion where the sealing surface 212b and the tabs 213 and 214 and the welding parts 213a and 214b are in contact with each other.

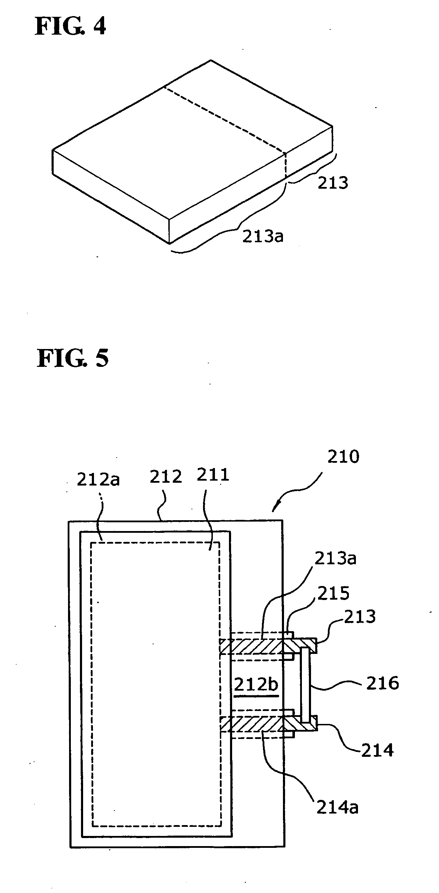

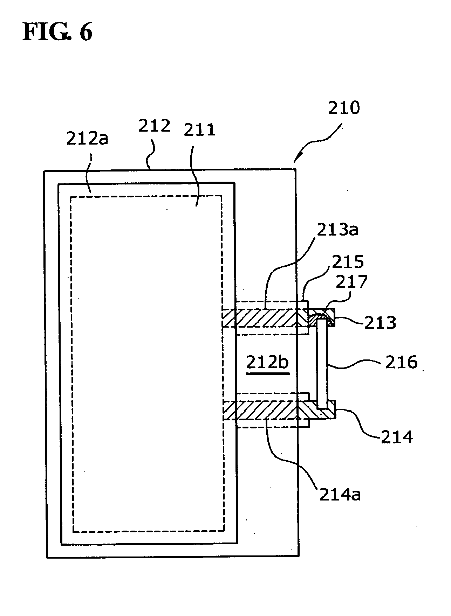

Further, as shown in FIG. 5, the positive tab 213 is designed as a safety tab in a manner such that a portion 217 of the positive tab 213 breaks away by rupturing as shown in FIG. 6, even if the positive tab 213 and the negative tab 214 are short-circuited by a conductive part 216.

Thanks to such a safety tab, the internal battery part 211 is prevented from exploding when current is rapidly increased. The positive tab 213, designed as the safety tab, and the negative tab 214 constitute a safety apparatus for short-circuits.

The casing 212 is a pouch type casing comprising a middle layer made of metal foil, and an outer layer and an inner layer attached to respective surfaces of the middle layer and made of an insulating film, unlike a can type casing, such as a cylinder or a prism, which is generally manufactured through a molding method and made of gold. The pouch type casing has excellent formability, and thus it can be freely bent. The casing 212 has space 212a for receiving the battery part 211 therein, and has a sealing face 212b provided on a face formed by fusing the casing 212 along the edges of the space 212a.

FIG. 3 is an enlarged view illustrating a cross-section of the lithium secondary battery, taken along line I-I shown in FIG. 2.

With reference to the drawing, the casing 212 is a complex film comprising a metal layer 212c made of metal foil, for example aluminum foil, and an inner layer 212d and an outer layer 212e made of an insulation film and attached on the inner and outer surfaces of the middle layer 212c, respectively, in order to protect the middle layer 212c.

In the space 212a formed in the casing 212, the battery part 212 comprising the positive electrode 211a, the separator 211c and the negative electrode 211b, arranged in that order, are disposed. The positive tab 213 and the negative tab 214 extend from the positive electrode 211a and the negative electrode 211b, respectively, as shown in FIG. 2.

An end portion of the positive tab 213 is attached to the positive tab welding part 213a. The positive tab welding part 213a serves to connect the positive tab 213 to the positive electrode 211a, and has respective end portions connected to the positive tab 213 and the positive electrode 211a.

Sealing tape 215 is wound around the outer surface of the positive tab 213 and the positive tab welding part 213a in order to prevent short-circuiting between the casing 212 and the tab 213 or between the casing 212 and the positive tab welding part 213a from occurring at a contact portion where the positive tab 213 and the positive tab welding part 213a come into contact with the sealing surface 212b.

The pouch type lithium secondary battery 210 having the above described structure is manufactured by electrically connecting the positive tab 213 and the negative tab 214 to the positive plate 211a and the negative plate 211b via the positive tab welding part 213a and the negative tab welding part 214a, and then forming the battery part 211 by arranging the positive plate 211a, the separator 211c and the negative plate 211b in that order and winding the combined structure of the plates and the separator 211a, 211c and 211b in one direction.

FIG. 4 is a perspective view illustrating the positive tab 213 and the positive tab welding part 213a of the pouch type lithium secondary battery. When viewing the plane of the lithium secondary battery, the positive tab and the positive tab welding part have a rectangular panel shape having uniform thickness, and are made of aluminum and aluminum alloy.

The positive tab 213 may be 0.1 to 0.4 millimeters thick, and more particularly 0.2 millimetres thick. In the positive tab, the length of the edge (width) that is parallel with the casing 211 is about 20 to 200 millimeters long, and the length of the edge that is perpendicular to the casing is 18 to 50 millimeters long.

The positive tab 213 preferably has a surface area ranging from 2 to 80 mm², and has a resistance ranging from 2.36 x 10⁻⁴ Ω to 1.64 x 10⁻⁵ Ω.

The positive tab welding part 213a preferably has an area of 40 to 800 mm².

In the above-described embodiment, the positive tab 213 is implemented as a safety tab, but the present invention is not limited thereto. The negative tab also can be implemented as the safety tab.

## Claims

1. A safety apparatus for short-circuit of a high power battery, comprising:
a casing; a battery part including a first electrode plate, a separator, and a second electrode plate arranged in that order and disposed inside the casing; a first tab connected to one edge of four edges of the first electrode plate via a first tab welding part and protruding outside the casing; and a second tab connected to one edge of four edges of the second electrode plate via a second tab welding part and protruding outside the casing, wherein the first tab comprises a portion which ruptures when the first tab and the second tab are short-circuited such that electrical conduction is interrupted.

2. The safety apparatus according to claim 1, wherein the first tab has a resistance in the range from 2.36 x 10⁻⁴ Ω to 1.64 x 10⁻⁵ Ω.

3. The safety apparatus according to either claim 1 or claim 2, wherein the first tab is a positive tab.

4. The safety apparatus according to either claim 1 or claim 2, wherein the first tab is a negative tab.

5. The safety apparatus according to either claim 1 or claim 2, wherein the first tab is made of aluminium or aluminium alloy.

6. The safety apparatus according to either claim 1 or claim 2, wherein the first tab has a panel shape.

7. The safety apparatus according to claim 6, wherein the first tab is about 0.1 to 0.4 millimetres thick.

8. The safety apparatus according to either claim 1 or claim 2, wherein, in the first tab, a length of an edge (width) parallel with the casing is about 20 to 200 millimetres long, and a length of an edge perpendicular to the casing is about 18 to 50 millimetres.

9. The safety apparatus according to either claim 1 or claim 2, wherein the first tab has an area of 2 to 80 mm².

10. The safety apparatus according to either claim 1 or claim 2, wherein the first tab welding part has an area of 40 to 800 mm².

## Patentansprüche

1. Sicherheitseinrichtung für Kurzschluss einer Hochleistungsbatterie, umfassend: ein Gehäuse; ein Batterieteil, das eine erste Elektrodenplatte, einen Separator und eine zweite Elektrodenplatte einschließt, die in dieser Reihenfolge angeordnet sind und innerhalb des Gehäuses angeordnet sind; eine erste Zunge, die über ein erstes Zungenschweißteil mit einem Rand von vier Rändern der ersten Elektrodenplatte verbunden ist und nach außen aus dem Gehäuse herausragt; und eine zweite Zunge, die über ein zweites Zungenschweißteil mit einem Rand von vier Rändern der zweiten Elektrodenplatte verbunden ist und nach außen aus dem Gehäuse herausragt, wobei die erste Zunge einen Teil umfasst, der zerbricht, wenn die erste Zunge und die zweite Zunge kurzgeschlossen werden, so dass eine elektrische Leitung unterbrochen wird.

2. Sicherheitseinrichtung nach Anspruch 1, wobei die erste Zunge einen Widerstand im Bereich von 2,36 x 10⁻⁴ Ω bis 1,64 x 10⁻⁵ Ω besitzt.

3. Sicherheitseinrichtung nach entweder Anspruch 1 oder Anspruch 2, wobei die erste Zunge eine positive Zunge ist.

4. Sicherheitseinrichtung nach entweder Anspruch 1 oder Anspruch 2, wobei die erste Zunge eine negative Zunge ist.

5. Sicherheitseinrichtung nach entweder Anspruch 1 oder Anspruch 2, wobei die erste Zunge aus Aluminium oder Aluminiumlegierung besteht.

6. Sicherheitseinrichtung nach entweder Anspruch 1 oder Anspruch 2, wobei die erste Zunge eine Tafelform besitzt.

7. Sicherheitseinrichtung nach Anspruch 6, wobei die erste Zunge etwa 0,1 bis 0,4 mm dick ist.

8. Sicherheitseinrichtung nach entweder Anspruch 1 oder Anspruch 2, wobei bei der ersten Zunge eine Länge eines zum Gehäuse parallelen Randes (Breite) etwa 20 bis 200 mm lang ist und eine Länge eines zum Gehäuse senkrechten Randes etwa 18 bis 50 Millimeter beträgt.

9. Sicherheitseinrichtung nach entweder Anspruch 1 oder Anspruch 2, wobei die erste Zunge eine Fläche von 2 bis 80 mm² besitzt.

10. Sicherheitseinrichtung nach entweder Anspruch 1 oder Anspruch 2, wobei der erste Zungenschweißteil eine Fläche von 40 bis 800 mm² besitzt.

## Revendications

1. Appareil de sécurité pour la mise en court-circuit d'un accumulateur haute énergie, comprenant : un boîtier ; un élément faisant office d'accumulateur englobant une première électrode plane, un séparateur et une deuxième électrode plane, arrangés dans cet ordre et disposés à l'intérieur du boîtier ; une première languette reliée à un des quatre bords de la première électrode plane via une partie de soudage de la première languette et faisant saillie à l'extérieur du boîtier ; et une deuxième languette reliée à un des quatre bords de la deuxième électrode plane via une partie de soudage de la deuxième languette et faisant saillie à l'extérieur du boîtier, la première languette comprenant une portion qui subit une rupture lorsque la première languette et la deuxième languette sont soumises à un court-circuit de façon à interrompre la conduction électrique.

2. Appareil de sécurité selon la revendication 1, dans lequel la première languette possède une résistance dans la plage de 2,36 x 10⁻⁴ Ω à 1,64 x 10⁻⁵ Ω.

3. Appareil de sécurité selon la revendication 1 ou 2, dans lequel la première languette est une languette positive.

4. Appareil de sécurité selon la revendication 1 ou 2, dans lequel la première languette est une languette négative.

5. Appareil de sécurité selon la revendication 1 ou 2, dans lequel la première languette est réalisée en aluminium ou en un alliage à base d'aluminium.

6. Appareil de sécurité selon la revendication 1 ou 2, dans lequel la première languette possède une configuration en forme de panneau.

7. Appareil de sécurité selon la revendication 6, dans lequel la première languette possède une épaisseur d'environ 0,1 à 0,4 mm.

8. Appareil de sécurité selon la revendication 1 ou 2, dans lequel, dans la première languette, la longueur d'un bord (largeur) parallèle au boîtier s'élève d'environ 20 à 200 mm, et la longueur d'un bord perpendiculaire au boîtier s'élève d'environ 18 à 50 mm.

9. Appareil de sécurité selon la revendication 1 ou 2, dans lequel la première languette possède une surface de 2 à 80 mm².

10. Appareil de sécurité selon la revendication 1 ou 2, dans lequel la partie de soudage de la première languette possède une surface de 40 à 800 mm².
